# EUROPÄISCHE PATENTANMELDUNG

(11) **EP 4 442 118 A1**
(43) Veröffentlichungstag der Anmeldung: **09.10.2024**
(21) Anmeldenummer: 24164056.4
(22) Anmeldetag: 18.03.2024
(51) Int. Cl.: A21C 9/06

(54) **TEIGVERARBEITUNGSVORRICHTUNG UND VERFAHREN ZUM FALTEN VON TEIGSTÜCKEN**

(30) Priorität: 05.04.2023 DE 102023108763
(71) Anmelder: Fritsch Bakery Technologies GmbH & Co. KG, 97348 Markt Einersheim (DE)
(72) Erfinder: GIER, Michael, 97318 Kitzingen (DE)
(74) Vertreter: Grünecker Patent- und Rechtsanwälte PartG mbB

(57) **Zusammenfassung**

Eine Teigverarbeitungsvorrichtung (1), die zum Falten eines Teigstücks (3) konfiguriert ist und eine Fördervorrichtung (2) umfasst, die zum Fördern des Teigstücks (3) in einer Förderrichtung (F) konfiguriert ist und ein bewegliches Förderelement (4) umfasst, das wenigstens einen gasdurchlässigen, insbesondere luftdurchlässigen, Abschnitt (5) aufweist und auf dem das Teigstück (3) ablegbar ist. Die Teigverarbeitungsvorrichtung (1) umfasst des Weiteren eine Faltvorrichtung (7), die zum Falten des Teigstücks (3) konfiguriert ist und die mindestens einen Faltschuh (8) umfasst, der dazu konfiguriert ist, das Teigstück (3) wenigstens teilweise von dem Förderelement (4) abzuheben, und eine Saugvorrichtung (11), die dazu konfiguriert ist, unter dem Förderelement (4) einen Unterdruck zu erzeugen und das Teigstück (3) wenigstens teilweise an das Förderelement (4) anzusaugen. Die Teigverarbeitungsvorrichtung (1) zeichnet sich dadurch aus, dass die Faltvorrichtung (7) dazu konfiguriert ist, das Teigstück (3) entlang einer Faltlinie (14) zu falten, die in einem Winkel von höchstens 30 Grad zu der Förderrichtung (F) orientiert ist.

## Beschreibung

Die Erfindung bezieht sich auf eine Teigverarbeitungsvorrichtung und ein Verfahren zum Falten von Teigstücken.

Bei der Herstellung einer Vielzahl von Teigprodukten werden Teigbänder gefaltet, bspw. um Füllungen einzuschlagen. Es sind Faltschuhe bekannt, wie sie z. B. die EP 3 141 124 A1 offenbart. Solche Faltschuhe werden über einem Förderband angeordnet. Wird nun ein Teigband gegen den Faltschuh gefördert, hebt dieser einen Teil des Teigbands an und faltet es dadurch. Während solche einfachen Faltschuhe sich zum Falten von Teigbändern gut eignen, sind sie zum Falten einzelner Teigstücke weniger geeignet, da einzelne Teigstücke durch ihre geringere Gesamtmasse häufig einfach an dem Faltschuh hängen bleiben, um eine Vertikalachse gedreht werden oder komplett gewendet anstatt gefaltet werden.

Aus der DE 60 2004 012 822 T2 ist eine Vorrichtung zur Herstellung zusammengesetzter Nahrungsmittel bekannt. Durch diese Vorrichtung soll eine Schinkenscheibe über eine Fleischfüllung gefaltet werden. Dazu werden Seitenwände eines Transportbands, auf dem die Schinkenscheibe gefördert wird, nach oben und einwärts gebogen. Um zu vermeiden, dass ein zwischen den Seitenwänden angeordneter Bereich des Transportbands sich beim nach oben Biegen der Seitenwände wölbt, ist unter diesem Bereich eine Vakuumkammer vorgesehen, die Luft, die sich zwischen der Vakuumkammer und dem Transportband befindet, absaugen soll. Wiederholte Biegungen beanspruchen Transportbänder jedoch mechanisch und reduzieren so deren Haltbarkeit. Außerdem benötigt diese Vorrichtung deutlich mehr Platz als Faltschuhkonstruktionen, wie die in EP 3 141 124 A1 gezeigte, und sind weniger flexibel, bspw. was die Faltung mehrerer parallel laufender Teigbänder und den Umrüstaufwand bei der Änderung der Anzahl von parallel laufenden Teigbändern betrifft.

Aus der DE 10 2020 210 735 A1 ist eine Vorrichtung zum Erzeugen von gefüllten Teigprodukten bekannt. Auch hier ist eine Saugvorrichtung vorgesehen, die dazu konfiguriert ist, unter einer Fördervorrichtung einen Unterdruck zu erzeugen. Allerdings sollen hier die Teigstücke selbst an ein Förderband angesaugt werden. Außerdem ist eine Wickelvorrichtung vorgesehen, die das Teigstück um eine senkrecht zur Förderrichtung verlaufende Wickelachse wickeln soll. Diese Vorrichtung eignet sich also nur für Produkte deren Herstellung ein Wickeln in dieser Richtung vorsieht.

Es ist eine Aufgabe der Erfindung, eine verbesserte Teigverarbeitungsvorrichtung und ein Verfahren anzugeben, die bzw. das auch für die Herstellung von anderen Teigprodukten eignet. Diese Aufgabe wird erfindungsgemäß gelöst durch eine Teigverarbeitungsvorrichtung mit den Merkmalen des Anspruchs 1 sowie durch ein Verfahren mit den Merkmalen des Anspruchs 9.

Es wird eine Teigverarbeitungsvorrichtung offenbart, die zum Falten eines Teigstücks konfiguriert ist. Die Teigverarbeitungsvorrichtung umfasst eine Fördervorrichtung, die zum Fördern des Teigstücks in einer Förderrichtung konfiguriert ist und ein bewegliches Förderelement umfasst, das wenigstens einen gasdurchlässigen, insbesondere luftdurchlässigen, Abschnitt aufweist. Das Teigstück ist auf dem Förderelement ablegbar. Die Teigverarbeitungsvorrichtung umfasst des Weiteren eine Faltvorrichtung, die zum Falten des Teigstücks konfiguriert ist und die mindestens einen Faltschuh umfasst, der dazu konfiguriert ist, das Teigstück, insbesondere einen Faltabschnitt des Teigstücks, wenigstens teilweise von dem Förderelement abzuheben. Außerdem umfasst die Teigverarbeitungsvorrichtung eine Saugvorrichtung, die dazu konfiguriert ist, unter dem Förderelement einen Unterdruck zu erzeugen und das Teigstück, insbesondere einen Halteabschnitt des Teigstücks, wenigstens teilweise an das Förderelement anzusaugen. Die Teigverarbeitungsvorrichtung zeichnet sich dadurch aus, dass die Faltvorrichtung dazu konfiguriert ist, das Teigstück entlang einer Faltlinie zu falten, die in einem Winkel von höchstens 30 Grad zu der Förderrichtung orientiert ist. Bevorzugt kann die Faltlinie im Wesentlichen parallel, besonders bevorzugt parallel, zu der Förderrichtung orientiert sein.

Durch diese Konfiguration der Faltvorrichtung kann die Herstellung von Teigprodukten ermöglicht oder erleichtert werden, deren Herstellung ein einfaches Falten eines Teigstücks vorsehen, bspw. um eine Füllung abzudecken oder einzuschlagen. Als Teigstück, wie im Zusammenhang mit der vorliegenden Erfindung verwendet, kann ein Teigband, das kontinuierlich gefaltet und später zu individuellen Teigprodukten vereinzelt werden kann, oder ein bereits vor dem Falten vereinzeltes Teigstück, das individuell gefaltet werden kann, angesehen werden.

Der gasdurchlässige Abschnitt kann sich über das gesamte Förderelement erstrecken. Es ist jedoch auch denkbar, dass sich der gasdurchlässige Abschnitt nur über einen oder mehrere Teilbereiche des Förderelements erstreckt. Als ein Faltschuh kann eine Struktur angesehen werden, die während des Betriebs relativ zu einer oder mehreren der übrigen Komponenten der Teigverarbeitungsvorrichtung, insbesondere relativ zu einem Gestell der Teigverarbeitungsvorrichtung, unbeweglich angeordnet sein kann, und die derart geformt und positioniert sein kann, dass das Teigstück durch das Förderelement in Eingriff mit ihr gebracht wird. Durch den Eingriff und das Weiterfördern des Teigstücks kann ein Abschnitt, insbesondere ein Faltabschnitt, des Teigstücks durch den Faltschuh derart bewegbar sein, dass das Teigstück gefaltet wird. Dazu kann der Faltschuh einen Rampenabschnitt aufweisen, der dazu konfiguriert sein kann, den Abstand zwischen dem Förderelement und dem Teigstück während des Förderns des Teigstücks zu vergrößern. Der Faltschuh kann des Weiteren einen Führungsabschnitt aufweisen, der dazu konfiguriert sein kann, den vorher durch den Rampenabschnitt angehobenen Abschnitt des Teigstücks in eine gewünschte Richtung zu führen, sodass das Teigstück wie gewünscht gefaltet werden kann.

Die Teigverarbeitungsvorrichtung kann des Weiteren eine Schablone umfassen, die zwischen der Saugvorrichtung und dem Förderelement angeordnet ist und dazu konfiguriert ist, die Saugvorrichtung in einem Abdeckbereich abzudecken. Dadurch kann in dem Abdeckbereich ein Ansaugen des Teigstücks an das Förderelement blockiert sein. Ein Blockieren des Ansaugens kann ein Abheben des Teigstücks von dem Förderelement in dem Abdeckbereich erleichtern. Auf diese Weise kann die Teigverarbeitungsvorrichtung dazu konfiguriert sein, das Abheben eines Teigstücks oder eines Faltabschnitts des Teigstücks gezielt in einem Bereich zu erleichtern.

Besonders günstig kann es sein, wenn der Faltschuh über dem Abdeckbereich angeordnet ist. In Ausführungen mit mehreren Faltschuhen können mehrere Faltschuhe über einem Abdeckbereich angeordnet sein. Alternativ oder zusätzlich kann jeder Faltschuh über einem Abdeckbereich angeordnet sein. Dadurch kann das Abheben des Teigstücks von dem Förderelement durch den Faltschuh erleichtert werden. Durch die Kombination des Blockierens des Ansaugens in dem Abdeckbereich mit dem Ansaugen des Teigstücks an das Förderelement außerhalb des Abdeckbereichs kann das Falten des Teigstücks gezielt unterstützt werden. Alternativ oder zusätzlich kann durch die Kombination des Blockierens des Ansaugens in dem Abdeckbereich mit dem Ansaugen des Teigstücks an das Förderelement außerhalb des Abdeckbereichs der Verlauf der Faltlinie gezielt beeinflusst werden.

Es ist denkbar, dass die Teigverarbeitungsvorrichtung, insbesondere die Faltvorrichtung, eine Faltschuhanordnung umfasst, welche den Faltschuh umfasst. Die Faltvorrichtung, insbesondere die Faltschuhanordnung, kann einen oder mehrere Faltschuhe umfassen. Durch eine Vielzahl von Faltschuhen kann die Teigverarbeitungsvorrichtung, insbesondere die Faltvorrichtung, dazu konfiguriert sein, mehrere Teigstücke, insbesondere mehrere quer zu der Förderrichtung nebeneinander angeordnete Teigstücke, gleichzeitig zu falten. Anzahl und/oder Positionierung der Faltschuhe können variierbar sein, bspw. durch Montieren und/oder Demontieren und/oder Verschieben der einzelnen Faltschuhe an bzw. von der Faltschuhanordnung. Jeder der Faltschuhe kann an bzw. von der Faltschuhanordnung verschiebbar und/oder montierbar und/oder demontierbar angeordnet sein.

Die Schablone kann dazu konfiguriert sein, die Saugvorrichtung in mehreren Abdeckbereichen abzudecken. Die Anzahl der Abdeckbereiche kann der Anzahl von Faltschuhen entsprechen, welche die Faltvorrichtung, insbesondere die Faltschuhanordnung, umfasst. Zum Einstellen der Anzahl und/oder der Positionierung der Abdeckbereiche, insbesondere zur Anpassung an die Anzahl und/oder der Positionierung der Faltschuhe, können mehrere verschiedene Schablonen vorgesehen sein. Alternativ oder zusätzlich kann die Schablone bzw. können die Schablonen einstellbar sein, bspw. durch verschiebbare Abdeckelemente.

Das Förderelement kann z. B. ein Förderband sein. Es kann vorteilhaft sein, wenn das Förderband Öffnungen aufweist. Alternativ oder zusätzlich kann das Förderband ein Gewebematerial enthalten. Durch die Öffnungen und/oder durch das Gewebematerial kann das Förderband dazu konfiguriert sein, eine Wirkung des durch die Saugvorrichtung erzeugten Unterdrucks auf das durch das Förderband geförderte Teigstück zumindest teilweise zu ermöglichen. Insbesondere kann das Förderband durch die Öffnungen und/oder durch das Gewebematerial dazu konfiguriert sein, eine Wirkung des durch die Saugvorrichtung erzeugten Unterdrucks auf einen Halteabschnitt des durch das Förderband geförderten Teigstücks zu ermöglichen Die Öffnungen und/oder das Gewebematerial können auf den gasdurchlässigen Abschnitt begrenzt sein.

Es ist denkbar, dass das Förderelement eine Vielzahl von Riemen umfassen kann. Auch dadurch kann das Förderband dazu konfiguriert sein, eine Wirkung des durch die Saugvorrichtung erzeugten Unterdrucks auf das durch das Förderband geförderte Teigstück zumindest teilweise zu ermöglichen, insbesondere auf einen Halteabschnitt des Teigstücks.

Die Erfindung bezieht sich auch auf ein Verfahren zum Falten von Teigstücken. Das Verfahren umfasst Fördern eines auf einem wenigsten teilweise gasdurchlässigen, vorzugsweise luftdurchlässigen, Förderelement einer Fördervorrichtung abgelegten Teigstücks durch die Fördervorrichtung in einer Förderrichtung. Das Verfahren umfasst des Weiteren Ansaugen eines Halteabschnitts des Teigstücks an das Förderelement durch eine Saugvorrichtung, und Abheben eines Faltabschnitts des Teigstücks von dem Förderelement durch eine Faltvorrichtung während des Ansaugens. Das Verfahren zeichnet sich durch Falten des Teigstücks entlang einer Faltlinie aus, die in einem Winkel von höchstens 30 Grad zu der Förderrichtung orientiert ist. Bevorzugt kann die Faltlinie im Wesentlichen parallel, besonders bevorzugt parallel, zu der Förderrichtung orientiert sein.

Durch dieses Verfahren kann die Herstellung von Teigprodukten ermöglicht oder erleichtert werden, deren Herstellung ein einfaches Falten eines Teigstücks vorsehen, bspw. um eine Füllung abzudecken oder einzuschlagen. Wie bereits mit Bezug auf die weiter oben beschriebene Vorrichtung erläutert, kann als Teigstück, wie im Zusammenhang mit der vorliegenden Erfindung verwendet, ein Teigband, das kontinuierlich gefaltet und später zu individuellen Teigprodukten vereinzelt werden kann, oder ein bereits vor dem Falten vereinzeltes Teigstück, das individuell gefaltet werden kann, angesehen werden.

Wie ebenfalls bereits mit Bezug auf die weiter oben beschriebene Vorrichtung erläutert, kann sich der gasdurchlässige Abschnitt über das gesamte Förderelement erstrecken. Es ist jedoch auch denkbar, dass sich der gasdurchlässige Abschnitt nur über einen oder mehrere Teilbereiche des Förderelements erstreckt. Als ein Faltschuh kann eine Struktur angesehen werden, die während des Betriebs relativ zu einer oder mehreren der übrigen Komponenten der Teigverarbeitungsvorrichtung, insbesondere relativ zu einem Gestell der Teigverarbeitungsvorrichtung, unbeweglich angeordnet sein kann, und die derart geformt und positioniert sein kann, dass das Teigstück durch das Förderelement in Eingriff mit ihr gebracht wird. Durch den Eingriff und das Weiterfördern des Teigstücks kann ein Abschnitt, insbesondere ein Faltabschnitt, des Teigstücks durch den Faltschuh derart bewegbar sein, dass das Teigstück gefaltet wird. Dazu kann der Faltschuh einen Rampenabschnitt aufweisen, der dazu konfiguriert sein kann, den Abstand zwischen dem Förderelement und dem Teigstück während des Förderns des Teigstücks zu vergrößern. Der Faltschuh kann des Weiteren einen Führungsabschnitt aufweisen, der dazu konfiguriert sein kann, den vorher durch den Rampenabschnitt angehobenen Abschnitt des Teigstücks in eine gewünschte Richtung zu führen, sodass das Teigstück wie gewünscht gefaltet werden kann.

Vorteilhafterweise kann das Verfahren des Weiteren Blockieren des Ansaugens in einem Abdeckbereich durch eine Schablone umfassen, die zwischen dem Förderelement und der Saugvorrichtung angeordnet ist. Ein Blockieren des Ansaugens kann das Abheben des Teigstücks oder eines Faltabschnitts des Teigstücks von dem Förderelement in dem Abdeckbereich erleichtern. Auf diese Weise kann die Teigverarbeitungsvorrichtung dazu konfiguriert sein, das Abheben eines Teigstücks oder eines Faltabschnitts des Teigstücks gezielt in einem Bereich zu erleichtern.

Die Erfindung bezieht sich auf eine Teigverarbeitungsvorrichtung sowie auf ein Verfahren der vorstehend beschriebenen Art. Im Folgenden wird eine vorteilhafte Ausführung anhand von Zeichnungen beispielhaft erläutert.
Figur 1 zeigt eine schematische Perspektivansicht einer Teigverarbeitungsvorrichtung.
Figur 2 zeigt eine schematische Perspektivansicht einer Teigverarbeitungsvorrichtung, wobei das Förderband und die entsprechenden Führungen ausgeblendet sind.
Figur 3 zeigt eine schematische Schnittansicht von Komponenten der Teigverarbeitungsvorrichtung mit einem gefalteten Teigstück mit Blickrichtung in Förderrichtung.
Figur 4 zeigt eine schematische Perspektivansicht einer Teigverarbeitungsvorrichtung gemäß einem weiteren Ausführungsbeispiel.

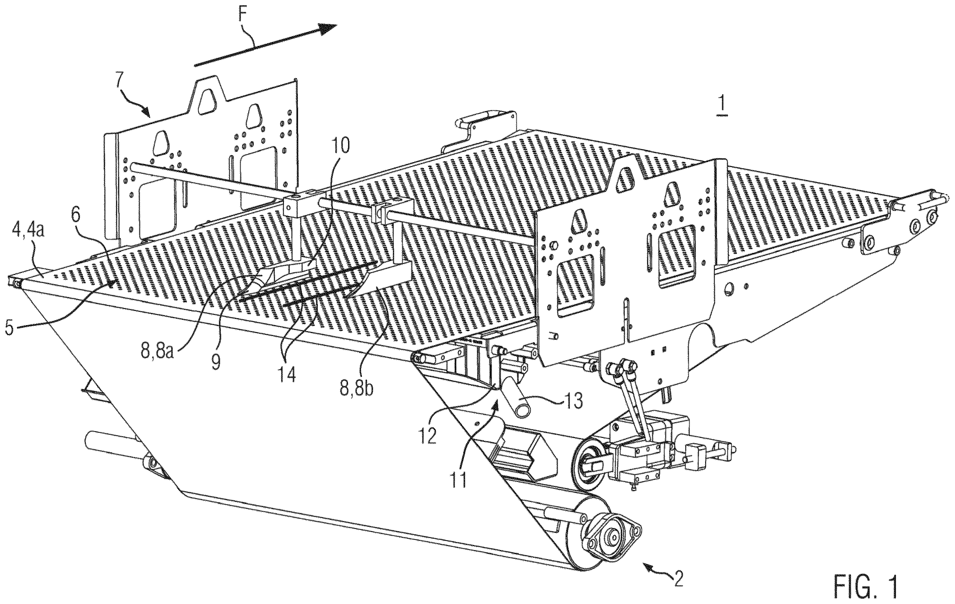

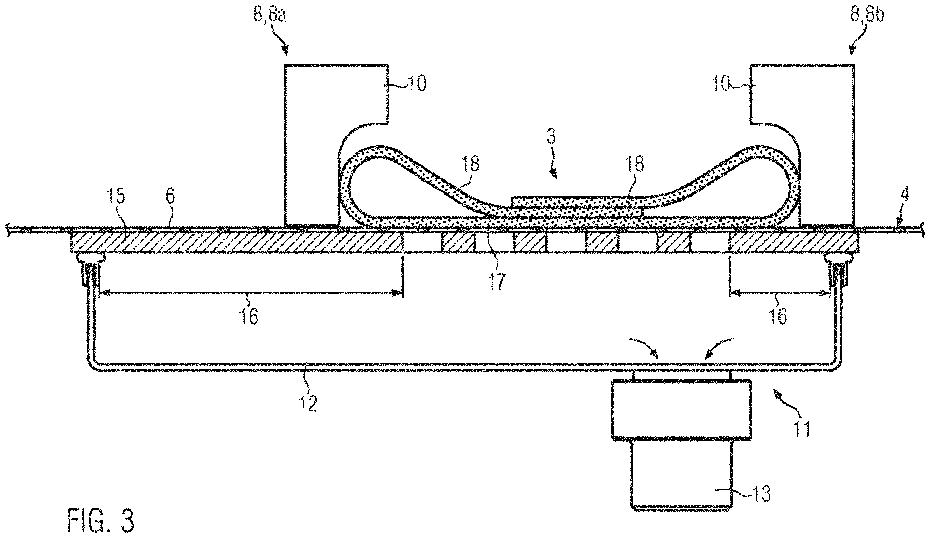

In Figur 1 ist eine Teigverarbeitungsvorrichtung 1 in einer schematischen Perspektivansicht dargestellt. Wie in Figur 1 zu sehen ist, kann die Teigbearbeitungsvorrichtung 1 eine Fördervorrichtung 2 umfassen. Die Fördervorrichtung 2 kann zum Fördern eines Teigstücks 3 (siehe Figur 3) in einer Förderrichtung F konfiguriert sein. Des Weiteren kann die Fördervorrichtung 2 ein Förderelement 4 umfassen. Das Teigstück 2 kann auf dem Förderelement 4 ablegbar sein. Das Förderelement 4 kann einen gasdurchlässigen, insbesondere luftdurchlässigen, Abschnitt 5 aufweisen. Wie im vorliegenden Ausführungsbeispiel dargestellt, kann sich der gasdurchlässige Abschnitt 5 über die gesamte Breite des Förderelements 4 erstrecken. Wie in Figur 1 angedeutet und in Figur 3 besser zu erkennen, kann das Förderelement 4, insbesondere in dem gasdurchlässigen Abschnitt 5, eine Vielzahl von Öffnungen 6 aufweisen. Wie in Figur 1 gezeigt, kann das Förderelement 4 ein Förderband 4a sein.

Die Teigverarbeitungsvorrichtung 1 kann des Weiteren eine Faltvorrichtung 7 umfassen. Die Faltvorrichtung 7 kann dazu konfiguriert sein, das Teigstück 3 zu falten. Die Faltvorrichtung 7 kann mindestens einen Faltschuh 8 umfassen. Insbesondere kann die Faltvorrichtung 7 einen ersten Faltschuh 8a und einen zweiten Faltschuh 8b umfassen. Jeder der Faltschuhe 8 kann dazu konfiguriert sein, das Teigstück 3 wenigstens teilweise von dem Förderelement 4 abzuheben. Wie beispielhaft anhand des ersten Faltschuhs 8a dargestellt, kann jeder der Faltschuhe 8 jeweils einen Rampenabschnitt 9 aufweisen. Der Rampenabschnitt 9 kann dazu konfiguriert sein, einen Abstand zwischen dem Förderelement 4 und dem Teigstück 3 während des Förderns des Teigstücks 3 zu vergrößern. Des Weiteren kann jeder der Faltschuhe 8 einen Führungsabschnitt 10 aufweisen. Der Führungsabschnitt 10 kann dazu konfiguriert sein, den vorher durch den Rampenabschnitt 9 angehobenen Abschnitt des Teigstücks 3 in eine gewünschte Richtung zu führen, beispielsweise sodass das Teigstück 3 wie gewünscht gefaltet werden kann.

Die Teigverarbeitungsvorrichtung 1 kann des Weiteren eine Saugvorrichtung 11 umfassen. Die Saugvorrichtung 11 kann dazu konfiguriert sein, unter dem Förderelement 4 einen Unterdruck zu erzeugen. Dadurch kann die Saugvorrichtung dazu konfiguriert sein, das Teigstück 3 wenigstens teilweise an das Förderelement 4 anzusaugen. Die Saugvorrichtung 11 kann einen Saugkasten 12 umfassen. Der Saugkasten 12 kann unterhalb des Förderelements 4 angeordnet sein und einen Sauganschluss 13 umfassen. Der Sauganschluss 13 kann mit einem Vakuumerzeuger (nicht gezeigt), zum Beispiel einer Pumpe oder einem Verdichter, verbunden sein.

Die Faltvorrichtung 7 kann dazu konfiguriert sein, das Teigstück 3 entlang einer Faltlinie 14 zu falten. Die Faltlinie 14 kann, wie im vorgestellten Ausführungsbeispiel dargestellt, insbesondere parallel zu der Förderrichtung F orientiert sein. Wie ebenfalls in Figur 1 gezeigt, kann die Faltvorrichtung 7 dazu konfiguriert sein, das Teigstück 3, beispielsweise durch zwei Faltschuhe 8, entlang zweier Faltlinien 14 zu falten. Jede der Faltlinien 14 kann parallel zu der Förderrichtung F orientiert sein. Es ist jedoch im Einklang mit der Erfindung auch denkbar, dass eine, mehrere oder alle der Faltlinien 14 in einem Winkel von höchstens 30° zu der Förderrichtung F orientiert sind.

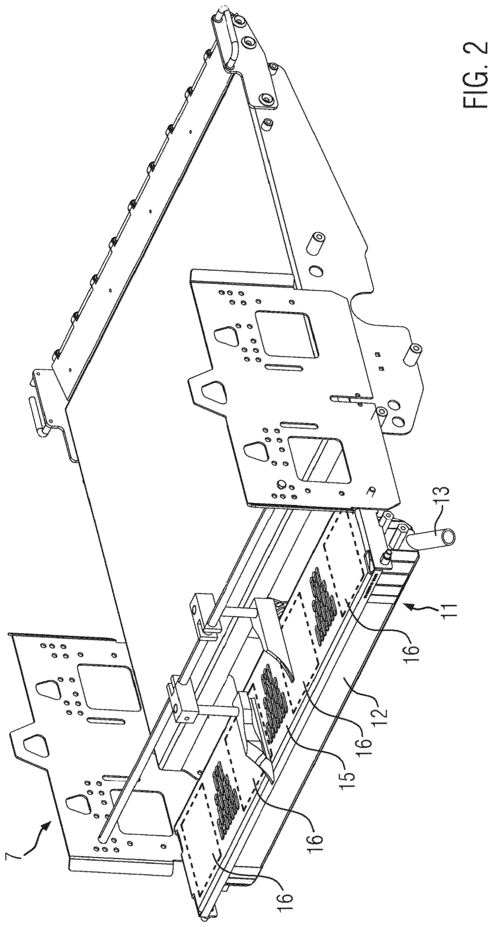

In Figur 2 sind verschiedene Komponenten der Teigverarbeitungsvorrichtung 1 in einer ähnlichen Ansicht wie in Figur 1 dargestellt. Zur Darstellung weiterer Komponenten ist, anders als in Figur 1, die Fördervorrichtung 2, insbesondere das Förderelement 4, ausgeblendet. Dadurch ist erkennbar, dass die Teigverarbeitungsvorrichtung 1 eine Schablone 15 umfassen kann. Die Schablone 15 kann zwischen der Saugvorrichtung 11, insbesondere dem Saugkasten 12, und dem Förderelement 4 angeordnet sein. Die Schablone 15 kann dazu konfiguriert sein, die Saugvorrichtung 11, insbesondere einer Sauöffnung des Saugkasten 12, in einem Abdeckbereich 16 abzudecken. Wie in Figur 2 dargestellt, können mehrere Abdeckbereiche 16 vorgesehen sein. In jedem der Abdeckbereiche kann ein Ansaugen des Teigstücks 3 an das Förderelement 4 blockiert sein. Wie in Figur 2 ebenfalls zu erkennen, kann der Faltschuh 8 über dem Abdeckbereich 16 angeordnet sein. In Ausführungen, in denen mehrere Faltschuhe 8 und oder mehrere Abdeckbereiche 16 vorgesehen sind, kann jeder der Faltschuhe 8 jeweils über einem Abdeckbereich 16 angeordnet sein.

In Figur 3 sind verschiedene Komponenten der Teigverarbeitungsvorrichtung 1 mit einem Teigstück 3 im gefalteten Zustand in einer schematischen Schnittansicht dargestellt. In dieser Ansicht weist die Förderrichtung F in die Zeichnungsebene hinein. Das Teigstück 3 ist im Querschnitt in einem gefalteten Zustand gezeigt. Ein Halteabschnitt 17 des Teigstücks 3 kann auf dem Förderelement 4 aufliegen. Der Halteabschnitt 17 kann durch die Saugvorrichtung 11 an das Förderelement 4 angesaugt werden. Wie in Figur 3 dargestellt, kann das Teigstück 3 des Weiteren einen Faltabschnitt 18, im vorliegenden Ausführungsbeispiel zwei Faltabschnitte 18, umfassen. Die Faltabschnitte 18 können durch die Faltschuhe 8 von dem Förderelement 4 abgehoben und durch die Führungsabschnitte 10 der Faltschuhe 8 in die in Figur 3 dargestellte Lage geführt werden. Das Ergebnis dieses Vorgangs ist in Figur 3 gezeigt.

Die Teigverarbeitungsvorrichtung 1 kann derart konfiguriert sein, dass das Teigstück 3 derart über die Schablone 15 gefördert wird, dass der eine oder die mehreren Faltabschnitte 18 über die Abdeckabschnitte 16 gefördert werden, sodass das Abheben der Faltabschnitte 18 von dem Förderelement 4 erleichtert werden kann. Die Teigverarbeitungsvorrichtung 1 kann des Weiteren derart konfiguriert sein, dass das Teigstück 3 derart gefordert wird, dass der Halteabschnitt 17 außerhalb der Abdeckbereiche 16 der Schablone 15 gefördert werden, sodass eine Haftung des Teigstücks 3, insbesondere des Halteabschnitts 17, auf dem Förderelement 4 erhöht werden kann und so das Falten ebenfalls unterstützt werden kann.

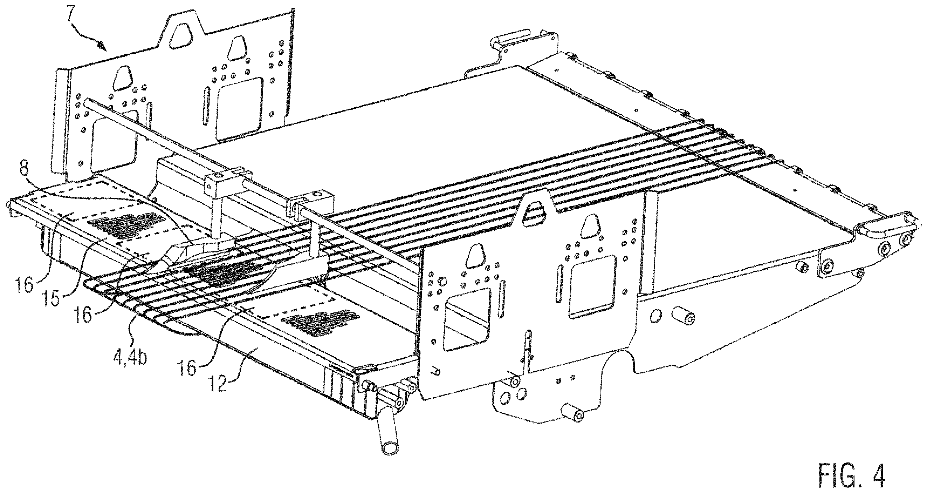

In Figur 4 sind Komponenten einer Teigverarbeitungsvorrichtung 1 gemäß einem weiteren Ausführungsbeispiel in einer der Ansicht aus Figur 2 ähnelnden Ansicht gezeigt. In diesem Ausführungsbeispiel kann das Förderelement 4 anstatt einem Förderband 4a eine Vielzahl an Förderriemen 4b umfassen. In einem solchen Ausführungsbeispiel ist es denkbar, dass die Faltschuhe 8, insbesondere Rampenabschnitte 9 der Faltschuhe 8 zwischen individuellen Riemen 4b angeordnet sein können. Durch eine solche Ausführung kann das Abheben des Teigstücks 3, insbesondere des Faltabschnitts 18 von dem Förderelement 4 unterstützt werden.

## Patentansprüche

1. Teigverarbeitungsvorrichtung (1), die zum Falten eines Teigstücks (3) konfiguriert ist und umfasst:
eine Fördervorrichtung (2), die zum Fördern des Teigstücks (3) in einer Förderrichtung (F) konfiguriert ist und ein bewegliches Förderelement (4) umfasst, das wenigstens einen gasdurchlässigen, insbesondere luftdurchlässigen, Abschnitt (5) aufweist und auf dem das Teigstück (3) ablegbar ist,
eine Faltvorrichtung (7), die zum Falten des Teigstücks (3) konfiguriert ist und die mindestens einen Faltschuh (8) umfasst, der dazu konfiguriert ist, das Teigstück (3) wenigstens teilweise von dem Förderelement (4) abzuheben, und
eine Saugvorrichtung (11), die dazu konfiguriert ist, unter dem Förderelement (4) einen Unterdruck zu erzeugen und das Teigstück (3) wenigstens teilweise an das Förderelement (4) anzusaugen,
**dadurch gekennzeichnet, dass** die Faltvorrichtung (7) dazu konfiguriert ist, das Teigstück (3) entlang einer Faltlinie (14) zu falten, die in einem Winkel von höchstens 30 Grad zu der Förderrichtung (F) orientiert ist.

2. Teigverarbeitungsvorrichtung nach Anspruch 1, des Weiteren umfassend eine Schablone (15), die zwischen der Saugvorrichtung (11) und dem Förderelement (4) angeordnet ist und dazu konfiguriert ist, die Saugvorrichtung (11) in einem Abdeckbereich (16) abzudecken.

3. Teigverarbeitungsvorrichtung nach Anspruch 2, wobei in dem Abdeckbereich (16) ein Ansaugen des Teigstücks (3) an das Förderelement (4) blockiert ist.

4. Teigverarbeitungsvorrichtung nach Anspruch 2 oder 3, wobei der Faltschuh (8) über dem Abdeckbereich (16) angeordnet ist.

5. Teigverarbeitungsvorrichtung nach einem der vorangehenden Ansprüche, wobei das Förderelement (4) ein Förderband (4a) ist.

6. Teigverarbeitungsvorrichtung nach Anspruch 5, wobei das Förderband (4a) Öffnungen (6) aufweist.

7. Teigverarbeitungsvorrichtung nach Anspruch 5 oder 6, wobei das Förderband (4a) ein Gewebematerial enthält.

8. Teigverarbeitungsvorrichtung nach einem der Ansprüche 1 bis 4, wobei das Förderelement (4) eine Vielzahl von Riemen (4b) umfasst.

9. Verfahren zum Falten von Teigstücken (3), umfassend:
Fördern eines auf einem wenigsten teilweise gasdurchlässigen, vorzugsweise luftdurchlässigen, Förderelement (4) einer Fördervorrichtung (2) abgelegten Teigstücks (3) durch die Fördervorrichtung (2) in einer Förderrichtung (F),
Ansaugen eines Halteabschnitts (17) des Teigstücks (3) an das Förderelement (4) durch eine Saugvorrichtung (11),
Abheben eines Faltabschnitts (18) des Teigstücks (3) von dem Förderelement (4) durch eine Faltvorrichtung (7) während des Ansaugens
**gekennzeichnet durch** Falten des Teigstücks (3) entlang einer Faltlinie (14), die in einem Winkel von höchstens 30 Grad zu der Förderrichtung (F) orientiert ist.

10. Verfahren nach Anspruch 9, des Weiteren umfassend Blockieren des Ansaugens in einem Abdeckbereich (16) durch eine Schablone (15), die zwischen dem Förderelement (4) und der Saugvorrichtung (11) angeordnet ist.
